# EUROPEAN PATENT APPLICATION

(11) **EP 4 427 855 A1**
(43) Date of publication of application: **11.09.2024**
(21) Application number: 23161281.3
(22) Date of filing: 10.03.2023
(51) Int. Cl.: B09B 3/35, B09B 3/50, B09B 3/24, D04H 1/4209, E04B 9/00, B09B 101/35

(54) **METHOD FOR PRODUCING A FIBER MATERIAL ELEMENT AND SYSTEM FOR CARRYING OUT THE METHOD**

(71) Applicant: Saint-Gobain Ecophon AB, 265 03 Hyllinge (SE)
(72) Inventor: KARLSSON, Ola, 222 41 Lund (SE)
(74) Representative: AWA Sweden AB

(57) **Abstract**

The present invention relates to a method for recycling mineral fiber material, the method comprising: providing the mineral fiber material (6) obtained from recycled mineral fiber material elements (2) comprising mineral fibers bonded by means of binder material; mixing the mineral fiber material (6) and an additional binder material (12), thereby obtaining a mixture (15); compacting the mixture (15), thereby obtaining a compacted mixture (17); and subjecting the mixture (15) to E-beam radiation for cross-linking of the binder material and the additional binder material (12), thereby obtaining a cross-linked mixture (21). The present invention further relates to a system for carrying out the method.

## Description

### Field fo the invention

The present invention relates to a method for recycling a mineral fiber material element, and a system for carrying out such a method.

### Background art

Elements comprising some kind of mineral fiber material, such as mineral wool, are used in a wide variety of applications, such as sound insulation and thermal insulation. Such elements are often produced by mixing fiber material with an adhesive material, compacting the mixture, and subsequently curing the mixture.

Handling of fiber material elements after end-of-life, e.g. after demolition of a building containing such elements, poses problems. Mainly, this is due to the inorganic nature of mineral fiber: the material may not be broken down by biological processes.

Present solutions of handling such elements include deposition in landfills. However, this requires space and is also an inefficient use of resources.

Therefore, there exists a need for an improved method of recycling mineral fiber material.

### Summary of the invention

In view of the above, an object of the present invention is to provide an improved method for recycling mineral fiber material.

It is also an objective to provide such a method which facilitates faster, cheaper, more flexible, more energy efficient and/or more material efficient recycling of said mineral fiber material.

A further object is to provide a system for carrying out such method.

To achieve at least one of the above objects and also other objects that will be evident from the following description, a method having the features defined in claim 1 and a system having the features defined in claim 16 are provided according to the present invention. Preferred embodiments will be evident from the dependent claims.

Any benefit or technical effect discussed in relation any aspect of the present invention, and any embodiments thereof, may be applicable to any other aspect of the present invention.

According to a first aspect of the present invention, a method for recycling mineral fiber material is provided, the method comprising: providing the mineral fiber material obtained from recycled mineral fiber material elements comprising mineral fibers bonded by means of binder material; mixing the mineral fiber material and an additional binder material, thereby obtaining a mixture; compacting the mixture, thereby obtaining a compacted mixture; and subjecting the mixture to E-beam radiation for cross-linking of the binder material and the additional binder material, thereby obtaining a cross-linked mixture.

Within the context of the application, the term "cross-linking" refers in accordance with convention to the joining of two or more polymer chains, a polymer chain and an unpolymerized or partially polymerized reagent, an unpolymerized or partially polymerized reagent with a cross-linking agent, or any combination thereof.

Within the context of the application, the term "E-beam radiation" refers in accordance with convention to electron beam processing or electron irradiation where electrons of high energy are used to treat an object. An electron gun may be used for generating and accelerating the electron beam, and a magnetic optical system may be used for controlling the electron beam.

A "mineral fiber material element" is to be understood as an element comprising a large amount of mineral fiber, e.g. such that a majority of the fiber material of the element is mineral fiber. That is, a mineral fiber material element does not have to exclusively consist of mineral fiber. A mineral fiber material element may thus comprise further fiber material, such as polymeric fibers or wood fibers.

Mineral fiber material obtained from recycled mineral fiber material elements comprising mineral fibers bonded by means of a binder material consequently comprises binder material. Thus, the mineral fiber material provided comprises binder material prior to further mixing. Therefore, less additional binder material is needed, and a more material efficient and cheaper method is provided.

Cross-linking by E-beam radiation may be performed at temperatures well below conventional curing temperature. Furthermore, it is faster and more precise than conventional curing by heat. Thus, cross-linking the binder material and the additional binder material by subjecting it to E-beam radiation provides a more flexible, faster, cheaper and more energy efficient method.

Cross-linking may occur between binder material and binder material as well as between additional binder material and additional binder material. Additionally or alternatively, cross-linking may occur between binder material and additional binder material. Furthermore, cross-linking may occur between binder material and mineral fiber material, and/or between additional binder material and mineral fiber material.

In at least some embodiments, the binder material is present in the recycled mineral fiber material element by an amount of 1 to 20 wt. %, or 2 to 15 wt. %, or 5 to 10 wt. %.

In at least some embodiments, the additional binder material may be present in the mixture by an amount of 1 to 20 wt. %, or 2 to 15 wt. %, or 5 to 10 wt. %.

Subjecting the compacted mixture to E-beam radiation may be performed in a variety of ways. For example, the mixture may be subjected to E-beam radiation from a single source, i.e. from one E-beam radiation device. Alternatively, the mixture may be subjected to E-beam radiation from a plurality of sources, i.e. from a plurality of E-beam radiation devices. The mixture may be subjected to E-beam radiation from a plurality of different directions. Alternatively, the mixture may be subjected to E-beam radiation in a pattern, such that the mixture is selectively cross-linked. For example, the mixture may be subjected to E-beam radiation in a selective manner such that only an outer portion of the mixture is cured. Alternatively, the mixture may only be cured at a predetermined penetration depth of the E-beam radiation. The number and orientation with regards to the mixture of E-beam radiation devices may be modified in order to achieve a predetermined penetration depth of the E-beam radiation.

The mixture may be subjected to E-beam radiation during any step or steps of the method. Hence, subjecting the mixture to E-beam radiation may be performed prior, during and/or after compacting the mixture.

Hereby, the exposure time and/or dosage may be varied.

The E-beam irradiation dose may vary with the binder material and additional binder material used. Furthermore, The E-beam irradiation dose may vary with the thickness of the mixture, or any other physical property of the mixture and/or the mineral fiber material.

In at least some embodiments, subjecting the mixture to E-beam radiation may comprise exposing the mixture to an irradiation dose in the range of 1-10 MeV.

The mineral fiber material may be any mineral fiber material. For example, the mineral fiber material may be provided in the form of mineral wool.

In at least some embodiments, the method may further comprise heating the mixture.

Hereby, the mixture is at least partially cured by heating. By curing by both heating and E-beam radiation, the amount and/or rate of curing is increased, thereby providing a faster method.

Heating may be performed by any heating means, such as an oven, a heat plate, or an IR-device.

Heating the mixture may be performed during any step of the process. Heating the mixture may e.g. be performed before subjecting the compacted mixture to E-beam radiation. In at least some embodiments, heating the mixture may be performed simultaneously as subjecting the mixture to E-beam radiation.

Hereby, the mixture is provided with more energy during cross-linking. Thus, the rate of cross-linking is increased, such that a more time-efficient method is provided.

In at least some embodiments, providing the mineral fiber material may comprise fragmentizing the recycled mineral fiber material elements.

Hereby, the fiber material elements are processed to a form which is easily mixed with further components, such as the additional binder material.

In at least some embodiments, the additional binder material may be provided as fibers having an average length in the range of 1-15 mm, or in the range of 2-14 mm, or in the range of 3-12 mm.

Hereby, a high area of contact between the binder material and the fiber material is achieved. Thus, the amount of binder material may be reduced, and a more material efficient method is provided.

In at least some embodiments, the additional binder material may be provided as polymer fibers, and wherein at least an outer portion of the plastic fibers is configured to be cross-linked in response to the additional binder material being subjected to E-beam radiation.

Hereby, the binder material may retain structural integrity even after activation, such that a more rigid fiber material element is provided.

In at least some embodiments, the additional binder material may be provided in the form of bicomponent fibers, such as PE/PE, PE/PET or PET/PET.

Alternatively, the additional binder material may not be provided in the form of a fiber. For example, the additional binder material may be provided as a powder. Alternatively, the additional binder material may be provided in aerosol form. Hereby, the binder material is easily added to the fiber material and easily mixed with the fiber material.

In at least some embodiments, the method may further comprise mixing the mineral fiber material and a virgin fiber material.

Hereby, only a portion of the mineral fiber material of the mineral fiber material element obtained from the method may be recycled mineral fiber material. Thus, the method may be readily integrated with process lines for providing virgin fiber material.

The mineral fiber material may be mixed with virgin mineral fiber material before the mineral fiber material is mixed with additional binder material. Alternatively, the mineral fiber material may be mixed with virgin mineral fiber after the mineral fiber material has been mixed with additional binder material.

Virgin fiber material may be any fiber material. Furthermore, virgin fiber material may be a combination of fiber materials. As such, virgin fiber material may e.g. be provided in the form of virgin mineral fiber material, and/or virgin wood fiber material, and/or virgin polymeric fiber material.

The amount of virgin fiber material in the obtained fiber material element may e.g. be 10%, or 20%, 30%, or 40%.

According to a second aspect of the present invention, a system for recycling mineral fiber material element is provided, the system comprising: a mixing device configured for mixing mineral fiber material and additional binder material, wherein the mineral fiber material is obtained from recycled mineral fiber material elements comprising mineral fibers bonded by means of binder material; a compacting device configured for compacting the mixed mineral fiber material and additional binder material; and an E-beam device configured for subjecting the mixed fiber material and additional binder material to E-beam radiation for cross-linking of the binder material and the additional binder material.

Hereby, a system configured for carrying out the method according to the first aspect of the present invention is provided. As such, technical effects and benefits related to the first aspect may be applicable for the second aspect.

In at least some embodiments, the system may further comprise a heating device configured for heating the mixed fiber material and binder material.

A heating device may e.g. be a heater, such as a convection heater, a heat plate, or an IR-device.

In at least some embodiments, the heating device may comprise an oven, and wherein the E-beam device may be arranged in the oven.

Hereby, the mixture is provided with energy from the oven simultaneously as cross-linking is induced by the E-beam device. Thus, the rate of cross-linking is increased.

The oven may comprise any number of heaters, and any type of heaters. The oven may e.g. comprise a plurality of convection heaters. Alternatively, the oven may comprise a plurality of IR-devices.

The system may furthermore comprise a plurality of E-beam devices arranged in the oven.

In at least some embodiments, the system may further comprise a fragmentizing device configured for fragmentizing a recycled mineral fiber material element so as to obtain mineral fiber material.

The fragmentizing device may be integrated into the mixer, such that the obtained mineral fiber material is readily mixed with the additional binder material.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

These and other embodiments of the present invention will now be described in more detail, with reference to the appended drawings showing exemplary embodiments of the present invention, wherein:
Fig. 1 is a schematic illustration of a methid, and features of a system carrying out the method, for obtaining mineral fiber material from recycled mineral fiber material elements.
Fig. 2 is a schematic illustration of a method, and features of a system carrying out the method, for cross-linking a mixture of mineral fiber material and additional binder material.
Fig. 3 is a schematic perspective view of a web of cross-linked mixture obtained from the method of Fig. 1 and Fig. 2.

### Description of embodiments

In the following detailed description, some embodiments of the present invention will be described. However, it is to be understood that features of the different embodiments are exchangeable between the embodiments and may be combined in different ways, unless anything is specifically indicated. Even though in the following description, numerous details are set forth to provide a more thorough understanding of the present invention, it will be apparent to one skilled in the art that the present invention may be practiced without these details. In other instances, well known constructions or functions are not described in detail, so as not to obscure the present invention.

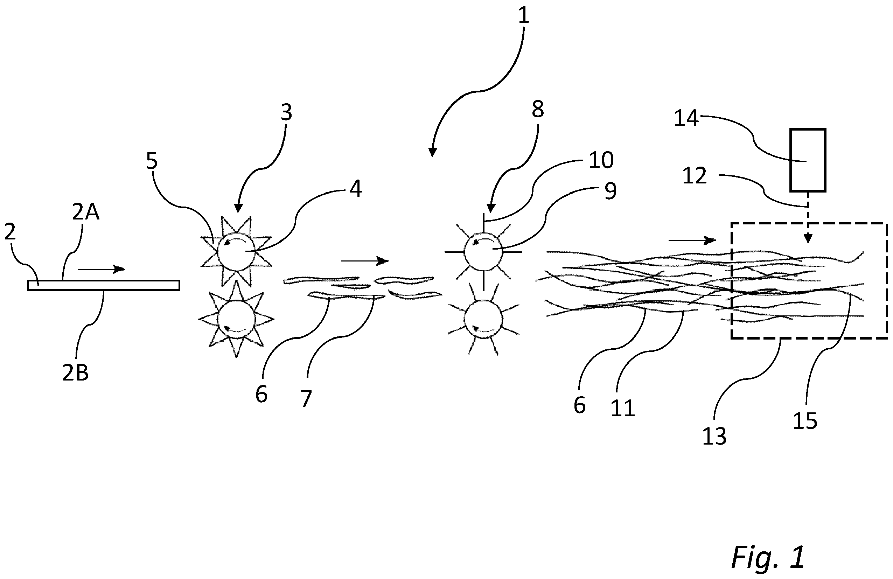

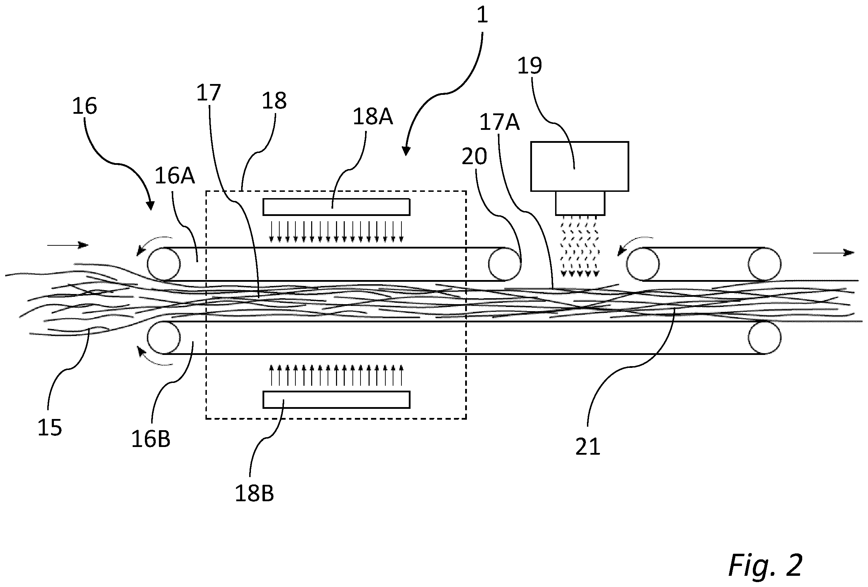

Fig. 1 is a schematic illustration of a method for obtaining mineral fiber material 6 from recycled mineral fiber material elements 2, and features of a system 1 carrying out the method, wherein the steps of the method may be comprised in a method for recycling mineral fiber material according to the first aspect of the present invention. It should be noted that even if some of the features illustrated in Fig. 1 is referred to as the system 1, the features in Fig. 1 merely constitutes a subset of all the features of the system 1, for illustrative purposes. Further features of the system 1 are shown in Fig. 2.

In Fig. 1, a recycled mineral fiber material element 2 is provided. The recycled mineral fiber material element 2 may e.g. be recycled from a building in which it has been used as an acoustical element, such as a ceiling tile made of mineral wool. The recycled mineral fiber material element 2 comprises mineral fibers bonded by means of a binder material. As such, the recycled mineral fiber material element 2 already comprises binder material, such that any mineral fiber material 6 obtained from the recycled mineral fiber material element 2 comprises binder material. Binder material may e.g. be present in the recycled mineral fiber material element by an amount of 1 to 20 wt. %, or 2 to 15 wt. %, or 5 to 10 wt. %.

The recycled mineral fiber material element 2 is fragmentized by a fragmentization device 3. The recycled fiber material element 2 is fed to the fragmentization device 3 in a direction indicated by the arrow above the element 2. The recycled fiber material element 2 may be fed to the fragmentization device 3 manually or automatically. For example, the recycled fiber material element 2 may be fed by a conveyor belt. Alternatively, the fragmentizing device 3 may be arranged such that recycled fiber material elements 2 may be dropped into the fragmentization device 3.

Here, the fragmentization device 3 comprises a first and a second fragmentization roll 4. Here, each fragmentization roll 4 comprising a plurality of teeth 5 for engaging the recycled mineral fiber material element 2. It is to be understood that a tooth 4 may be any kind of protrusion configured for engaging with and shred, rip, tear or otherwise fragmentize a mineral fiber material element 2. To this end, a tooth 5 may be provided in a variety of shapes. For example, a tooth 5 may be substantially block-shaped. Alternatively, a tooth 4 may be cylindrical. Any fragmentization roll 4 may comprise teeth 5 of different shapes. Furthermore, any tooth 5 of one fragmentization roll 4 may be different from any tooth of the other fragmentization roll 4. The fragmentization rolls 4 are configured to rotate around a respective rotational axis. The direction of rotational of each roll 4 is indicated by a respective arrow. Here, the fragmentization rolls 4 rotate in opposite directions. Further, the fragmentization rolls 4 are arranged such that, in a fragmentizing position, they engage a respective side 2A, 2B of the recycled mineral fiber material element 2. Hereby, the fragmentization rolls 4, in a fragmentizing position, not only engages the recycled mineral fiber material element 2 such that it is fragmentized, but also pulls the recycled mineral fiber material element 2 in a direction indicated by the arrow above the element 2. Alternatively, the system 1 may comprise only one fragmentization roll 4. For example, one fragmentization roll 4 may be arranged over a flat surface, or over a conveyor belt, wherein the recycled mineral fiber material element 2 is brought between the fragmentization roll 4 and the flat surface or conveyor belt. The system may comprise a plurality of fragmentization devices 3. For example, a plurality fragmentization devices 3 may be arranged in series.

After the recycled mineral fiber material element 2 has been fragmentized, mineral fiber material 6 is obtained. The mineral fiber material 6 may, after fragmentization, be in a form that is not suitable for further processing. In particular, the mineral fiber material 6 may be in the form of mineral fiber pieces 7, as is shown in Fig. 1. Therefore, the mineral fiber pieces 7 may be carded, such that the constituent fibers are further separated and straightened. Hereby, the mineral fiber material 6 may be more easily handled, mixed with other fibers and/or additional binder material 12. To this end, the system 1 further comprises a carding device 8. Here, the carding device 8 comprises a first and a second carding roll 9. Here, each carding roll 9 comprising a plurality of carding pins 10 configured for engaging the mineral fiber pieces 7 in order to card them. The carding rolls 9 are configured to rotate around a respective rotational axis. The direction of rotational of each roll 9 is indicated by a respective arrow. Here, the carding rolls 9 rotate in opposite directions. Alternatively, the system 1 may comprise only one carding roll 9. For example, one carding roll 9 may be arranged over a flat surface, or over a conveyor belt, wherein the mineral fiber pieces 7 are brought between the carding roll 9 and the flat surface or conveyor belt. The system 1 may comprise a plurality of carding devices 8. For example, a plurality of carding devices 8 may be arranged in series.

After the mineral fiber pieces 7 have been carded, the mineral fiber material 6 is in the form of carded mineral fibers 11. The carded mineral fibers 11 are subsequently mixed with additional binder material 12, such that a mixture 15 is obtained. The carded mineral fibers 11 may be mixed with additional binder material 12 directly after the carding device 8. To this end, the system comprises a mixing device 13. Here, the mixing device 13 is schematically illustrated by a dashed box. A mixing device 13 may be any type of unit configured for receiving carded mineral fibers 11 and additional binder material 12, such that mineral fiber material 6 and additional binder material may be mixed. The carded mineral fibers 11 may be brought into the mixing device 13 by a conveyor belt. For example, the carded mineral fibers 11 may be transported through the mixing device 13 by a conveyor belt while being mixed with additional binder material 12. Alternatively, the carded mineral fibers may be transported into the mixing device 13 by airflow.

Additional binder material 12 may be provided as fibers having an average length in the range of 1-15 mm, or in the range of 2-14 mm, or in the range of 3-12 mm. Alternatively, additional binder material 12 may be provided as polymer fibers, and wherein at least an outer portion of the plastic fibers is configured to be cross-linked in response to the additional binder material 12 being subjected to E-beam radiation. Alternatively, the additional binder material 12 may be provided in the form of bicomponent fibers, such as PE/PE, PE/PET or PET/PET. Alternatively, the additional binder material may not be provided in the form of a fiber. For example, the additional binder material may be provided as a powder. Alternatively, the additional binder material may be provided in aerosol form.

In Fig. 1, the additional binder material 12 is shown as being provided by an ejector 14. An ejector 14 may be any device configured for storing and/or ejecting additional binder material 12. Therefore, the ejector 14 may be configured to deposit binder material onto the carded mineral fibers 11. For example, the ejector 14 may be configured to spray binder material onto the carded mineral fibers 11. The ejector 14 may be integrated into the mixing device 13, such that the mixing device 13 comprises the ejector. Furthermore, the mixing device 13 may comprise more than one ejector 14. The mixing device 13 may e.g. comprise a plurality of ejectors 14, wherein each ejector 14 is configured to store and/or deposit the same type of binder material. Alternatively, the ejectors 14 may be configured to store and/or deposit different types of binder material.

The proportions of mineral fiber material 6 and additional binder material 12 in the mixture may vary depending on the desired properties of a fiber material element obtained from the method according to the first aspect of the present invention. The additional binder material may e.g. be present in the mixture by an amount of 1 to 20 wt. %, or 2 to 15 wt. %, or 5 to 10 wt. %.

Furthermore, the mineral fiber material 6 may be mixed with a virgin fiber material. The mineral fiber material 6 may be mixed with virgin mineral fiber material before, or during, or after the mineral fiber material 6 is mixed with additional binder material 12. Virgin fiber material may be any fiber material. Alternatively, virgin fiber material may be a combination of fiber materials. As such, virgin fiber material may e.g. be provided in the form of virgin mineral fiber material, and/or virgin wood fiber material, and/or virgin polymeric fiber material. The amount of virgin fiber material in the obtained fiber material element may e.g. be 10%, or 20%, 30%, or 40%.

Further features of the system 1 are shown in Fig. 2. Here, the mixture 15 is provided to a compacting device 16 configured for compacting the mixture 15. The mixture 15 may e.g. be transported and fed to compacting device 16 by an airflow. The compacting device 16 comprises a first conveyor belt 16A and a second conveyor belt 16B. The first and second conveyor belt 16A, 16B are arranged so that the mixture 15 is received between them, such that the mixture 15 may be compacted, such that compacted mixture 17 is obtained. The first and second conveyor belt 16A, 16B may thus be arranged at a predetermined distance from each other, wherein the predetermined distance substantially corresponds to a desired thickness of the compacted mixture 17. Hereby, the first and second conveyor belt 16A, 16B may be arranged at a predetermined distance substantially corresponding to a desired thickness of a cured fiber material element obtained from the method according to the first aspect of the present invention. The first and second conveyor belt 16A, 16B are configured to rotate in opposite directions, which directions are indicated by arrows in Fig. 2. Hereby, the compacting device 16 is compacting the mixture 15, while simultaneously transporting it in the direction indicated by the arrow above the mixture 15.

The compacted mixture 17 is subsequently brought to a heating device 18 configured for heating the compacted mixture 17. Here, the heating device is an oven comprising two heaters. Here, the heaters are provided as a first radiator 18A and a second radiator 18B. The oven 18 may comprise any number of heaters, and any type of heaters. The oven 18 may e.g. comprise a plurality of convection heaters. Alternatively, the oven 18 may comprise a plurality of IR-devices.

Here, the first and second conveyor belt 16A, 16B is arranged through the oven 18, such that the compacted mixture 17 may be heated while simultaneously being compacted. Hereby, the compacted mixture 17 is at least partially cured, which entails that it at least partially retains its shape and dimensions if ejected from the compacting device 16.

The system 1 further comprises an E-beam device 19. The E-beam device 19 is configured for subjecting the compacted mixture 17 to E-beam radiation for cross-linking of the binder material and/or the additional binder material 12. Here, the system 1 comprises one E-beam device 19. However, the system 1 may comprise a plurality of E-beam devices 19, such that the mixture 15 may be subjected to E-beam radiation from a plurality of sources. For example, the mixture 15 may be subjected to E-beam radiation from a plurality of different directions. In fig 2, the E-beam device 19 subjects the compacted mixture 17 in a direction towards a top surface 17A thereof. Alternatively, any E-beam device 19 may be arranged on the side of the system 1, such that it radiates compacted mixture 17 in a direction going into the figure.

The compacted mixture 17 may further be subjected to E-beam radiation in a pattern, such that the mixture 17 is selectively cross-linked. For example, the mixture 17 may be subjected to E-beam radiation in a selective manner such that only an outer portion of the mixture 17 is cured. Alternatively, the mixture 17 may only be cured at a predetermined penetration depth of the E-beam radiation. The number and orientation with regards to the mixture of any E-beam device 19 may to this end be modified in order to achieve a predetermined penetration depth of the E-beam radiation.

Here, the mixture 15 is cross-linked when in the form of compacted mixture 17. However, the mixture 15 may alternatively be subjected to E-beam radiation during any other step or steps of the method. For example, subjecting the mixture 15 to E-beam radiation may be performed prior, during and/or after compacting the mixture 15.

The E-beam irradiation dose may be in the range of 1-10 MeV. The E-beam irradiation dose provided by the E-beam device 19 may vary with the binder material and additional binder material used. Furthermore, The E-beam irradiation dose may vary with the thickness of the mixture 15 or compacted mixture 17, or any other physical property of the mixture 15, compacted mixture 17 and/or the mineral fiber material 6.

That the compacted mixture 17 is at least partially cured by the heating device 18 is here of particular importance, since the E-beam device 19 is configured to radiate the compacted mixture 17 through an opening 20 of the first conveyor belt 16A, as is shown in Fig. 2. This is because the partial curing of the compacted mixture 17 entails that it at least partially retains its size and dimensions when passing the opening 20 of the conveyor belt 16A. Thus, the extent to which the compacted mixture 17 protrudes into the opening 20 is reduced. However, the system 1 is not limited to having the E-beam device 19 arranged after the oven 18. Alternatively, the E-beam device 19 may be arranged in the oven 18.

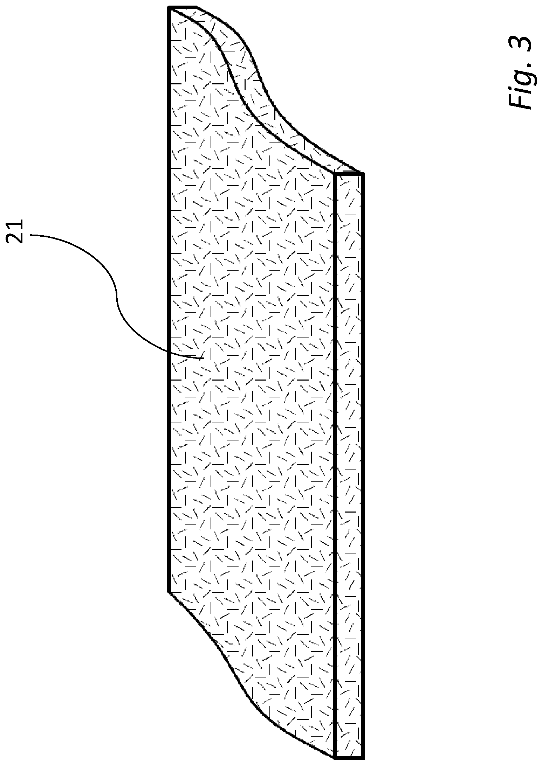

After the compacted mixture 17 has been subjected to E-beam radiation, a cross-linked mixture 21 is obtained. A web of cross-linked mixture 21 is shown in Fig. 3. The web of cross-linked mixture 21 may further be cut into mineral fiber elements of desired shape and size.

It will be appreciated that the present invention is not limited to the embodiments shown. Several modifications and variations are thus conceivable within the scope of the invention which thus is exclusively defined by the appended claims.

## Claims

1. A method for recycling mineral fiber material, the method comprising:
providing the mineral fiber material (6) obtained from recycled mineral fiber material elements (2) comprising mineral fibers bonded by means of binder material;
mixing the mineral fiber material (6) and an additional binder material (12), thereby obtaining a mixture (15);
compacting the mixture (15), thereby obtaining a compacted mixture (17); and
subjecting the mixture (15) to E-beam radiation for cross-linking of the binder material and the additional binder material (12), thereby obtaining a cross-linked mixture (21).

2. The method according to claim 1, wherein subjecting the mixture (15) to E-beam radiation is performed prior, during and/or after compacting the mixture (15).

3. The method according to claim 1, further comprising heating the mixture (15).

4. The method according to claim 3, wherein heating the mixture (15) is performed simultaneously as subjecting the mixture (15) to E-beam radiation.

5. The method according to any preceding claim, wherein the mineral fiber material (6) is provided in the form of mineral wool.

6. The method according to any preceding claim, wherein providing the mineral fiber material (6) comprises fragmentizing the recycled mineral fiber material elements (2).

7. The method according to any preceding claim, wherein the binder material is present in the recycled mineral fiber material element (2) by an amount of 1 to 20 wt. %, or 2 to 15 wt. %, or 5 to 10 wt. %.

8. The method according to any one of the preceding claims,
wherein the additional binder material (12) is provided as fibers having an average length in the range of 1-15 mm, or in the range of 2-14 mm, or in the range of 3-12 mm.

9. The method according to any preceding claim, wherein the additional binder material (12) is provided as polymer fibers, and wherein at least an outer portion of the plastic fibers is configured to be cross-linked in response to the additional binder material (12) being subjected to E-beam radiation.

10. The method according to claim 9, wherein the additional binder material (12) is provided in the form of bicomponent fibers, such as PE/PE, PE/PET or PET/PET.

11. The method according to any one of claims 1 to 8, wherein the additional binder material (12) is provided as a powder.

12. The method according to any one of claims 1 to 8, wherein the additional binder material (12) is provided in aerosol form.

13. The method according to any one of the preceding claims,
wherein the additional binder material (12) is present in the mixture by an amount of 1 to 20 wt. %, or 2 to 15 wt. %, or 5 to 10 wt. %.

14. The method according to any one of the preceding claims,
wherein subjecting the mixture (15) to E-beam radiation comprises exposing the mixture (15) to an irradiation dose in the range of 1-10 MeV.

15. The method according to any one of the preceding claims, further comprising mixing the mineral fiber material (6) and a virgin fiber material.

16. A system for recycling mineral fiber material element, the system comprising:
a mixing device (13) configured for mixing mineral fiber material (6) and additional binder material (12), wherein the mineral fiber material (6) is obtained from recycled mineral fiber material elements (2) comprising mineral fibers bonded by means of binder material;
a compacting device (16) configured for compacting the mixed mineral fiber material (6) and additional binder material (12); and
an E-beam device (19) configured for subjecting the mixed fiber material (6) and additional binder material (12) to E-beam radiation for cross-linking of the binder material and the additional binder material (12).

17. The system according to claim 17, further comprising a heating device (18) configured for heating the mixed fiber material (6) and additional binder material (12).

18. The system according to claim 18, wherein the heating device (18) comprises an oven, and wherein the E-beam device (19) is arranged in the oven.

19. The system according to any one of claims 17 to 19, further comprising a fragmentizing device (3) configured for fragmentizing a recycled mineral fiber material element (2) so as to obtain mineral fiber material (6).
